# FASCICULE DE BREVET EUROPEEN

(11) **EP 4 073 955 B1**
(45) Date de publication et mention de la délivrance du brevet: **30.10.2024**
(21) Numéro de dépôt: 20829952.9
(22) Date de dépôt: 03.12.2020
(51) Int. Cl.: H04B 7/155, H04W 74/08, H04W 88/04

(54) **PROTOCOLE DE RELAYAGE DANS UN RÉSEAU DE TÉLÉCOMMUNICATIONS CELLULAIRE**
PROTOKOLL ZUR WEITERLEITUNG IN EINEM MOBILFUNKNETZ
RELAYING PROTOCOL IN A CELLULAR TELECOMMUNICATIONS NETWORK

(30) Priorité: 12.12.2019 FR 1914286
(43) Date de publication de la demande: 19.10.2022
(73) Titulaire: Orange, 92130 Issy-les-Moulineaux (FR)
(72) Inventeur: VARSIER, Nadège, 92326 CHATILLON (FR); LAMPIN, Quentin, 92326 CHATILLON (FR)
(74) Mandataire: Cabinet Beau de Loménie
(86) Numéro de dépôt international: PCT/FR2020/052275
(87) Numéro de publication internationale: WO 2021/116571

(56) Documents cités:
- US-A1- 2010 150 103
- US-B2- 10 129 890
- CATT: "Random Access Procedure for NR", vol. RAN WG2, no. Gothenburg, Sweden; 20160822 - 20160826, 21 August 2016 (2016-08-21), XP051126526, Retrieved from the Internet <URL:http://www.3gpp.org/ftp/Meetings_3GPP_SYNC/RAN2/Docs/> [retrieved on 20160821]

## Description

### Technique antérieure

L'invention se rapporte au domaine général des réseaux de télécommunications, et plus précisément à celui du relayage de données dans un réseau de télécommunications cellulaire. Elle s'applique de façon privilégiée mais non limitative dans le contexte des réseaux D2D (en anglais Device-To-Device).

Dans le contexte actuel de croissance continue du nombre d'objets connectés, on a assisté à l'émergence de réseaux de télécommunications cellulaires particulièrement adaptés à ces objets connectés. Ces réseaux cellulaires sont parfois désignés par le nom de Cellular IoT (Internet of Things). Les réseaux LTE-M (Long Term Evolution for Machines) et NB-IoT (Narrowband IoT) développé par le 3GPP (Third Génération Partnership Project font notamment partie intégrante du processus de standardisation nouvelle radio (NR) 5G ; ils ont la capacité de répondre aux besoins spécifiques de connectivité de ces objets : ils supportent un nombre très important d'objets, répondent à des contraintes de coût et de consommation d'énergie, prévoient l'envoi sporadique de petits paquets de données ...

Lorsqu'un objet connecté se trouve trop éloigné de la station de base, ou lorsqu'il est séparé de la station de base par des obstacles notamment, les conditions de connexion directe de cet objet à la station de base peuvent être difficiles, voire impossibles.

Pour répondre à ce problème, des solutions de relayage ont été envisagées. Dans une telle configuration, un dispositif relais, ci-après parfois simplement appelé relais, relaie les données entre l'objet connecté et la station de base, soit dans le sens montant (données envoyées par l'objet connecté à la station de base), soit dans le sens descendant (données envoyées par la station de base à l'objet connecté), soit dans les deux sens.

Ce dispositif relais est typiquement un dispositif utilisateur de type smartphone à proximité de l'objet connecté et moins contraint en énergie que l'objet connecté.

Deux types de configurations existent lorsqu'il s'agit de relayage D2D. La première configuration est celle où les relais seraient spécifiquement déployés par l'opérateur de réseau mobile. Ces relais peuvent être installés dans des endroits stratégiques où la couverture est insuffisante ou bien les conditions de propagation défavorables.

La présente invention s'applique dans ces deux configurations.

Dans une communication D2D LTE, telle que décrite dans le standard 3GPP, on peut distinguer 3 phases:
- une phase de synchronisation et d'établissement de la connexion, où le dispositif mobile va se synchroniser en temps avec la station de base si il est en couverture réseau ou bien directement avec le relais si il est hors couverture réseau ;
- une phase de découverte et de choix du relais ;
- une phase de transmission des données au relais.

L'invention se situe plus particulièrement dans la phase de découverte et de choix du relais.

Dans l'état actuel de la technique, deux modes de découverte du relais sont standardisés pour la technologie LTE :
- le mode A «I'm here» dans lequel les relais candidats se manifestent pour indiquer leur présence et qu'ils sont en mesure de relayer un message, et
- le mode B « who is there ? » dans lequel le dispositif cherchant un relais se manifeste et envoie un message pour demander s'il existe un relais potentiel à proximité.

Pour plus de renseignements sur ces deux modes, l'homme du métier peut se reporter au document "Proximity-Based Services (ProSe) (Release 14)," Third Génération Partnership Project (3GPP),Tech. Rep. TS 23.303, Dec. 2016 ».

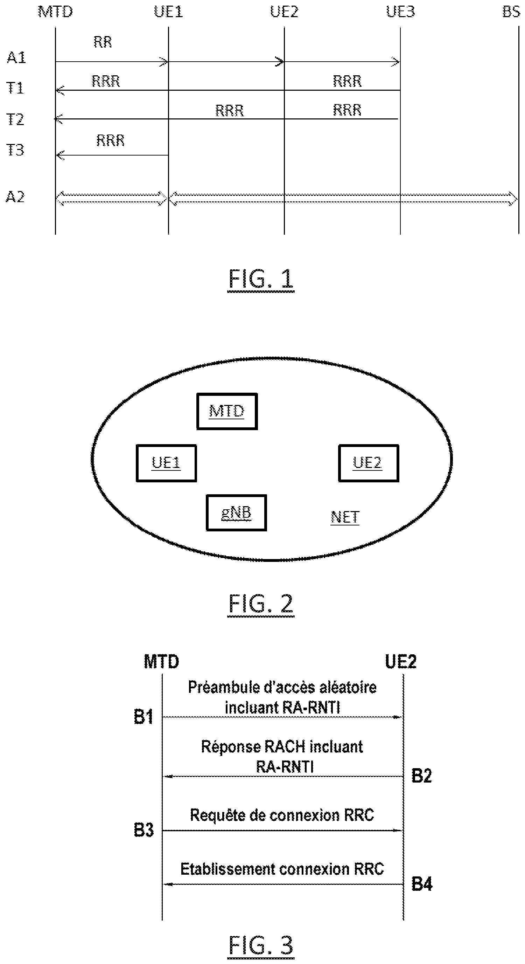

Dans chacun de ces deux modes, et comme représenté à la **figure 1****,** plusieurs dispositifs relais potentiels (ou candidats) pour répondre à une demande de relayage sont susceptibles d'entrer en compétition.

Sur cette figure, on a représenté un objet connecté MTD, trois dispositifs UE1, UE2, UE3 candidats au rôle de relais et une station de base BS dans un scénario comportant:
- l'envoi (étape A1) d'une requête RR de demande de relais (Request for a Relay) par l'objet connecté MTD, dans le cadre de l'utilisation du mode B de découverte de relais;
- une première étape (T1) dans lequel deux dispositifs UE1 et UE3 répondent à la requête RR, par l'envoi d'une réponse RRR, générant une première collision ;
- une deuxième étape (T2) dans lequel deux dispositifs UE2 et UE3 répondent à la requête RR, générant une deuxième collision ; et
- une troisième étape (T3) dans lequel seul le dispositif UE1 répond à la requête RR, ce dispositif UE1 étant finalement retenu pour relayer (étape A2) les données entre le dispositif MTD et la station de base BS à l'issue de ce processus de contention.

Ce mécanisme présente plusieurs inconvénients : il engendre des collisions, et le dispositif relais UE1 finalement retenu n'est pas nécessairement le meilleur candidat du point de vue de la gestion des ressources du réseau cellulaire.

Le document US 2010/0150103 A1 divulgue un noeud de relais transmettant une demande de ressource pour la transmission de données d'un équipement utilisateur, la demande comprenant l'identité de l'équipement utilisateur.

### Exposé de l'invention

L'invention vise un mécanisme de relayage qui ne présente pas les inconvénients présentés ci-dessus.

Ainsi selon un premier aspect, l'invention concerne un procédé de candidature mis en oeuvre par un dispositif désirant se porter candidat pour relayer des données entre un objet et une station de base dans un réseau cellulaire, l'objet et le dispositif étant synchronisés et connectés auprès de la station de base.

Ce procédé comporte :
- une étape d'émission d'une requête, sur un canal à accès aléatoire, pour demander des ressources du réseau pour relayer ces données, cette requête comportant un identifiant de l'objet ;
- une étape de réception d'une réponse à ladite requête en provenance de la station de base ;
- la candidature dudit dispositif étant retenue ou rejetée en fonction de ladite réponse,
le procédé étant caractérisé en ce que ladite requête comporte une demande de ressources dudit réseau pour transmettre des données propres audit dispositif.

Corrélativement, l'invention concerne un dispositif désirant se porter candidat pour relayer des données entre un objet et une station de base dans un réseau cellulaire, l'objet et le dispositif étant synchronisés et connectés auprès de la station de base. Ce dispositif comporte :
- un module d'émission d'une requête, sur un canal à accès aléatoire, pour demander des ressources du réseau pour relayer ces données, cette requête comportant un identifiant de l'objet ;
- un module de réception d'une réponse à ladite requête en provenance de la station de base ;
- la candidature dudit dispositif étant retenue ou rejetée en fonction de ladite réponse,
le procédé étant caractérisé en ce que ladite requête comporte une demande de ressources dudit réseau pour transmettre des données propres audit dispositif.

Selon un deuxième aspect, l'invention concerne un procédé de sélection mis en oeuvre par une station de base pour sélectionner un dispositif candidat pour relayer des données entre un objet et ladite station de base dans un réseau cellulaire, l'objet et le dispositif étant synchronisés et connectés auprès de ladite station de base. Ce procédé comporte :
- une étape de réception, en provenance d'au moins un dispositif d'une requête émise par ce dispositif, sur un canal à accès aléatoire, pour demander des ressources dudit réseau pour relayer lesdites données, ladite requête comportant un identifiant de cet objet ;
- une étape de sélection d'un unique dispositif parmi lesdits dispositifs candidats ;
- une étape d'allocation de ressources dans le réseau et d'envoi d'une réponse positive au dispositif sélectionné ; et
- une étape d'envoi d'une réponse négative aux dispositifs candidats non sélectionnés,
le procédé étant caractérisé en ce que ladite requête reçue d'un dispositif comporte en outre une demande de ressources pour des données propres audit dispositif, la réponse envoyée audit dispositif comportant en outre une réponse quant à l'allocation des ressources pour les données propres dudit dispositif.

Corrélativement, l'invention concerne une station de base configurée pour sélectionner un dispositif candidat pour relayer des données entre un objet et la station de base dans un réseau cellulaire, l'objet et ledit dispositif étant synchronisés et connectés auprès de la station de base. Cette station de base comporte :
- un module de réception, en provenance d'au moins un dispositif, d'une requête émise par ce dispositif, sur un canal à accès aléatoire, pour demander des ressources dudit réseau pour relayer lesdites données, cette requête comportant un identifiant dudit objet ;
- un module de sélection d'un unique dispositif parmi les dispositifs candidats ;
- un module d'allocation des ressources dans ledit réseau et d'envoi d'une réponse positive au dispositif sélectionné ; et
- un module d'envoi d'une réponse négative aux dispositifs candidats non sélectionnés,
le procédé étant caractérisé en ce que ladite requête reçue d'un dispositif comporte en outre une demande de ressources pour des données propres audit dispositif, la réponse envoyée audit dispositif comportant en outre une réponse quant à l'allocation des ressources pour les données propres dudit dispositif.

Ainsi, et d'une façon générale, l'invention propose que le choix du relais, parmi plusieurs dispositifs candidats, pour relayer des données entre un objet et la station de base, dans le sens montant et/ou dans le sens descendant, soit confié à la station de base du réseau cellulaire avant l'établissement d'une connexion..

Ce mécanisme permet d'éviter les collisions pendant la phase de découverte et de sélection du relais. La contention entre les relais potentiels est alors réalisée sur le canal prévu à cet effet (le canal PRACH - Physical Random Access Channel). La résolution de la contention est réalisée par la station de base, ce qui permet d'éviter le problème du noeud caché ou encore les doublons de demande de connexion et assure une gestion des ressources radio plus efficace.

L'objet connecté au sens de l'invention peut être d'un type quelconque. Il peut être ou non du même type que le dispositif candidat/relais (téléphone intelligent, tablette, ...). Il peut aussi être constitué par un dispositif plus léger (montre connectée, ampoule connectée,...). Dans le présent document on utilise les expressions « objet connecté » et « dispositif » pour distinguer le dispositif relayé et le dispositif relais mais ce vocabulaire n'impose rien sur la structure ou sur le type de ces équipements.

Dans l'état actuel de la technique, un dispositif effectue des demandes de ressources sur le canal à accès aléatoire pour ses besoins propres. L'invention autorise ici un dispositif à faire une demande de ressources pour un tiers (objet connecté), autrement dit en tant que mandataire pour ce tiers.

L'invention permet à la station de base de refuser d'allouer des ressources pour une telle demande ou de choisir le dispositif relais selon sa propre politique.

Dans un mode de réalisation de l'invention, le canal à accès aléatoire est le canal PRACH (Physical Random Access Channel) défini par la norme (ref : 3GPP TS 36.211 « Evolved Universal Terrestrial Radio Access (E-UTRA); Physical channels and modulation » release 8).

L'invention propose ainsi de modifier le fonctionnement de la procédure de découverte, mode B, de relais porté par le canal physique PSDC (Physical Sidelink Discovery Channel) et d'étendre le RACH pour spécifier l'identité de l'objet connecté, autrement dit de l'objet relayé.

Dans un mode de réalisation, l'invention propose un préambule RACH étendu qui peut contenir, en supplément de l'identifiant permettant de discriminer le dispositif relais, un identifiant permettant de discriminer le dispositif relayé du type Random Access-Radio Network Temporary Identifier (RA-RNTI).

Dans une variante de l'invention, la requête comporte une demande de ressources du réseau pour transmettre des données propres au dispositif.

Ce mode de réalisation permet au dispositif de demander dans la même requête des ressources pour ses besoins propres et des ressources pour relayer le message d'un tiers.

Par exemple dans un mode de réalisation de l'invention, la procédure de découverte mode B de relai porté par le canal physique PSDC (Physical Sidelink Discovery Channel) peut être modifiée comme suit :
- l'objet connecté (ou plus généralement le dispositif souhaitant être relayé) transmet un message contenant un identifiant, par exemple le Remote User ID.
- le relai enregistre l'identifiant et génère un préambule PRACH contenant un préfixe cyclique et une séquence de Zadoff-Chu.

Ce préambule RACH peut contenir :
- un identifiant RA-RNRTI (Radio Network Access Relay Temporary Identifier) discriminant le relai ayant émis le message des autres émetteurs ; et
- un identifiant RA-RNTI qui discrimine le dispositif relayé.

La station de base peut transmettre une réponse 'PRACH Response' étendue contenant les identifiants RA-RNTI et le RA-RNRTI ainsi que les ressources éventuellement allouées pour le relayage.

Dans un premier mode de réalisation de cette variante, la réponse envoyée par la station de base audit dispositif comporte l'identifiant concerné par la réponse (à savoir celui RA-RNTI de l'objet connecté relayé ou celui RA-RNRTI du dispositif relayeur). Le dispositif est ainsi en mesure de déterminer si la réponse de la station de base concerne les ressources demandées pour relayer les données de l'objet connecté ou les ressources demandées pour les besoins propres du dispositif.

Dans un deuxième mode de réalisation de cette variante, la réponse envoyée par la station de base audit dispositif comporte une réponse quant à l'allocation des ressources demandées pour relayer les données de l'objet connecté et une réponse quant à l'allocation des ressources pour lesdites données propres du dispositif.

Dans un mode de réalisation de l'invention, l'identifiant de l'objet est un identifiant temporaire ou permanent, éventuellement un nombre aléatoire tiré par l'objet. Cet identifiant est par exemple de type IMEI (International Mobile Equipment Identity), TMSI (Temporary Mobile Subscriber Identity) ou RA-RNTI (Random Access Radio Network Temporary Identifier).

Dans un mode de réalisation de l'invention, l'identifiant de l'objet n'est pas renseigné explicitement dans la requête mais il est encodé dans ladite requête, par exemple par une combinaison d'un intervalle de temps et d'une fréquence.

Dans un mode particulier de réalisation, les procédés sont mis en oeuvre par des programmes d'ordinateur.

Par conséquent, l'invention vise également un programme d'ordinateur sur un support d'enregistrement, ce programme étant susceptible d'être mis en oeuvre dans un dispositif ou plus généralement dans un ordinateur. Ce programme comporte des instructions adaptées à la mise en oeuvre d'un procédé de candidature tel que décrit ci-dessus.

L'invention vise également un programme d'ordinateur sur un support d'enregistrement, ce programme étant susceptible d'être mis en oeuvre dans une station de base ou plus généralement dans ordinateur. Ce programme comporte des instructions adaptées à la mise en oeuvre d'un procédé de sélection tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite illustre un mécanisme de relayage de l'état actuel de la technique ;
- la figure 2 représente un dispositif et une station de base conformes à un mode particulier de réalisation de l'invention dans leur environnement ;
- la figure 3 illustre un mécanisme d'accès aléatoire conforme à l'état actuel de la technique ;
- la figure 4 représente un procédé de candidature et un procédé de sélection conforme à un mode particulier de réalisation de l'invention ;
- la figure 5 représente un procédé de candidature et un procédé de sélection conforme à un autre mode particulier de réalisation de l'invention ;
- la figure 6A représente l'architecture fonctionnelle d'un dispositif conforme à un mode particulier de réalisation de l'invention ;
- la figure 6B représente l'architecture fonctionnelle d'une station de base conforme à un mode particulier de réalisation de l'invention ;
- la figure 7A représente l'architecture matérielle d'un dispositif conforme à un mode particulier de réalisation de l'invention ; et
- la figure 7B représente l'architecture matérielle d'une station de base conforme à un mode particulier de réalisation de l'invention.

### Description des modes de réalisation

La **figure 2** représente un objet connecté MTD, deux dispositifs UE1, UE2 et une station de base gNB dans un réseau cellulaire NET, les dispositifs UE1, UE2 et la station de base gNB étant conformes à des modes de réalisation de l'invention. L'invention est décrite ainsi dans l'exemple de la 5G. Elle s'applique de la même façon dans un réseau 4G, les stations de base étant de type eNB.

On suppose que les dispositifs UE1, UE2 et que l'objet connecté MTD sont synchronisés et connectés auprès de la station de base gNB.

On rappelle maintenant, en référence à la **figure 3****,** le mécanisme d'accès aléatoire mis en oeuvre conformément à l'état actuel de la technique, dans un tel réseau.

De façon connue dans un tel réseau, lorsqu'un terminal T (nom générique choisi pour désigner le dispositif UE1, UE2 ou l'objet connecté MTD) souhaite transmettre des données sur le réseau, il émet une requête sur un canal à accès aléatoire PRACH pour demander des ressources au réseau. Ces ressources sont gérées par la station de base gNB.

Plus précisément, et comme décrit dans le document TS 36.211, le terminal choisit aléatoirement un préambule parmi un ensemble de préambules disponibles réservés pour un processus de contention et il transmet sa requête (étape B1) dans un message court dans le premier intervalle de temps (en anglais slot) disponible de l'accès aléatoire. L'envoi de ce message court se fait de façon cyclique.

Ces requêtes sont écoutées et reçues par la station de base gNB qui décide d'allouer ou non les ressources demandées. Elle répond (étape B2) à cette requête PRACH par un message PAR (Random Access Response), ce message indiquant si les ressources demandées ont été allouées ou refusées.

De façon connue par l'homme du métier, ce message de réponse comporte également un alignement en temps TA qui permet au terminal de se synchroniser. Le terminal ajuste son temps de transmission sur le TA reçu et transmet (étape B3) un message Radio Ressource Control (RRC) dans le canal montant PUSCH (Physical Uplink Shared Channel). Si la station de base gNB décode correctement le message envoyé à l'étape B3, elle transmet (étape B4) la résolution de contention au terminal T. Dans le cas où le terminal T n'a pas reçu correctement la réponse RAR ou la résolution de contention dans une fenêtre de temps fixée, il recommence la procédure d'accès aléatoire à l'étape B1.

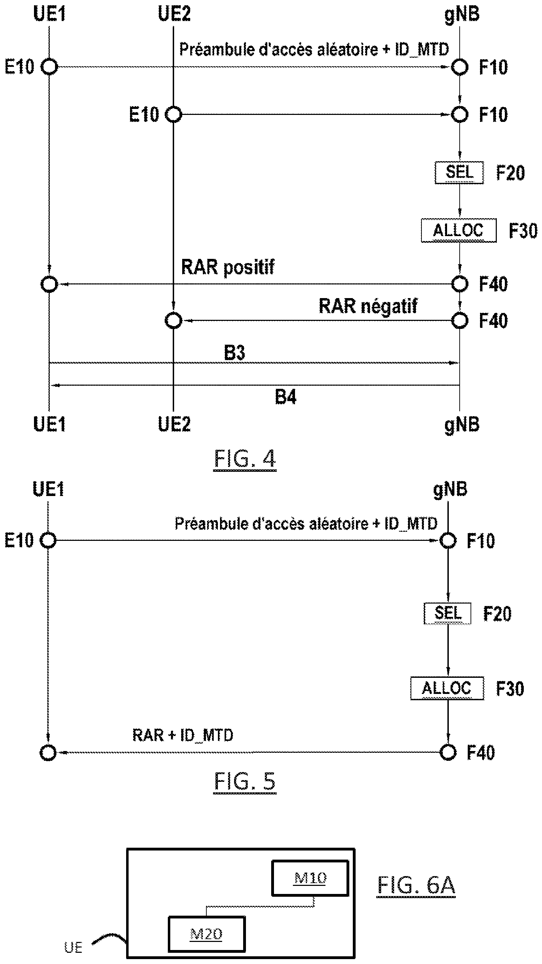

La **figure 4** illustre un procédé de candidature et un procédé de sélection conformes à un premier mode particulier de réalisation de l'invention.

On suppose que les dispositifs UE1, UE2 et que l'objet connecté MTD sont connectés et synchronisés avec la station de base gNB.

On suppose dans cet exemple que les dispositifs UE1 et UE2 ont reçu une requête RR de demande de relais (Request for Relay) diffusée par l'objet connecté, pour relayer un message de cet objet destiné à la station de base.

On suppose dans cet exemple que le dispositif UE1 et que le dispositif UE2 souhaitent chacun se porter candidat pour relayer un message de l'objet connecté MTD.

Dans l'exemple de réalisation décrit ici, si l'objet connecté diffuse le message à relayer en même temps que la demande de relais, chacun des dispositifs UE1 et UE2 mémorise ce message en attendant de savoir si sa candidature sera retenue ou non par la station de base.

Conformément à l'invention, au cours d'une étape E10, chacun des dispositifs UE1, UE2 émet une requête sur le canal à accès aléatoire PRACH pour demander des ressources au réseau pour relayer ce message. Cette requête comportant un identifiant ID_MTD de l'objet connecté, par exemple son identifiant IMEI, TMSI ou RA-RNTI.

Ces requêtes sont reçues par la station de base gNB au cours d'une étape F10.

Au cours d'une étape F20, la station de base gNB sélectionne un unique dispositif pour relayer le message de l'objet connecté MTD.

Dans l'exemple de réalisation décrit ici, elle sélectionne le premier candidat, à savoir le dispositif UE1.

Au cours d'une étape E30 connue de l'homme du métier, la station de base gNB alloue des ressources dans le réseau pour permettre au dispositif UE1 de relayer le message de l'objet connecté.

Au cours d'une étape E40, elle envoie une réponse RAR (Random Access Response) positive comportant les ressources allouées au dispositif UE1 et une réponse négative au dispositif UE2. Cette réponse RAR est identique à la réponse RAR de l'état de la technique décrite précédemment en référence à l'étape B2 de la figure 3.

Par conséquent, dans ce premier mode de réalisation, seule l'étape B1 est modifiée, la modification consistant à modifier le préambule PRACH pour contenir un identifiant de l'objet connecté MTD relayé.

Les dispositifs UE1, UE2 reçoivent cette réponse au cours d'une étape F20. Le dispositif UE1 comprend qu'il est retenu pour relayer le message de l'objet connecté MTD et le dispositif UE2 comprend que sa demande est rejetée.

Le mécanisme d'accès aléatoire se poursuit comme décrit précédemment en référence aux étapes B3 et B4 de la figure 3.

La **figure 5** illustre un procédé de candidature et un procédé de sélection conformes à un deuxième mode particulier de réalisation de l'invention.

Dans ce mode de réalisation, on suppose que le dispositif UE1 souhaite se porter candidat pour relayer un message de l'objet connecté MTD et que ce dispositif UE1 souhaite également demander des ressources pour ces données propres.

Dans ce mode de réalisation de l'invention, le dispositif UE1 émet une seule requête sur le canal à accès aléatoire PRACH pour demander (i) des ressources au réseau pour relayer le message de l'objet connecté et (ii) des ressources pour transmettre ses propres données. Conformément à l'invention cette requête comportant un identifiant ID_MTD de l'objet connecté, par exemple son identifiant IMEI, TMSI ou RA-RNTI.

Cette requête est reçue par la station de base gNB au cours d'une étape F10.

Au cours d'une étape F20, la station de base gNB décide de sélectionner ou non le dispositif UE1 pour relayer le message de l'objet connecté MTD. Si c'est le cas, la station de base gNB alloue (étape F30) des ressources dans le réseau pour permettre au dispositif UE1 de relayer le message de l'objet connecté.

Au cours de cette même F20, la station de base gNB décide d'allouer ou non des ressources pour les besoins propres du dispositif UE1. Si c'est le cas, la station de base gNB alloue (étape F30) des ressources pour les données propres du dispositif UE1.

Dans ce mode de réalisation de l'invention, la station de base répond (F40) au dispositif UE1 sur les deux demandes d'allocation. Cette réponse peut se faire en un seul message RAR ou comme représenté sur la figure 5 en deux messages RAR.

Dans le mode de réalisation décrit ici, la réponse RAR à la demande d'allocation de ressources pour relayer les données de l'objet connecté MTD comporte l'identifiant ID_MTD de cet objet.

La **figure 6A** représente de façon fonctionnelle un dispositif UE désirant se porter candidat pour relayer des données entre un objet et une station de base dans un réseau cellulaire, ce dispositif étant conforme à un mode particulier de réalisation de l'invention. Il comporte :
- un module ME10 configuré pour émettre une requête, sur un canal à accès aléatoire, pour demander des ressources d'un réseau pour relayer des données entre un objet et une station de base, cette requête comportant un identifiant de cet objet ;
- un module ME20 de réception d'une réponse à cette requête en provenance de la station de base;
- la candidature du dispositif étant retenue ou rejetée en fonction de ladite réponse.

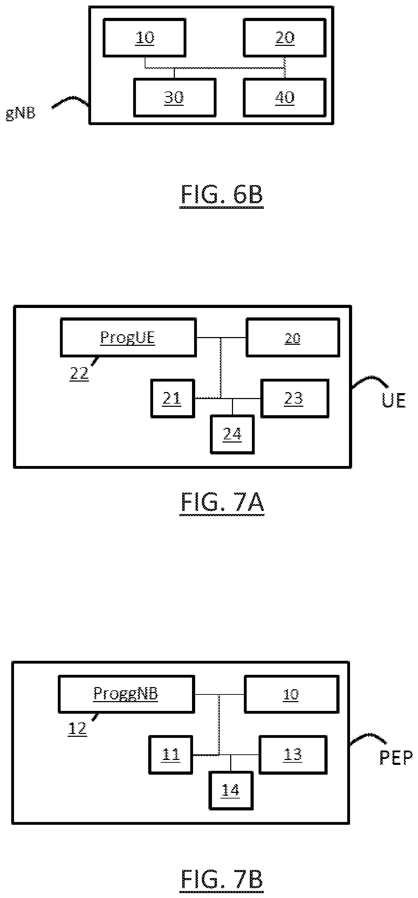

La **figure 6B** représente de façon fonctionnelle une station de base gNB configurée pour sélectionner un dispositif candidat pour relayer des données entre un objet et cette station de base dans un réseau cellulaire, l'objet et le dispositif étant synchronisés et connectés auprès de cette station de base. Elle comporte :
- un module MF10 de réception, en provenance d'au moins un dispositif d'une requête émise par ce dispositif, sur un canal à accès aléatoire), pour demander des ressources dudit réseau pour relayer lesdites données, cette requête comportant un identifiant de l'objet ;
- un module MF20 de sélection d'un unique dispositif (UE1) parmi lesdits dispositifs candidats ;
- un module MF30 d'allocation desdites ressources dans ledit réseau et d'envoi d'une réponse positive audit dispositif sélectionné ; et
- un module MF40 d'envoi d'une réponse négative auxdits dispositifs candidats non sélectionnés.

La **figure 7A** représente l'architecture matérielle d'un dispositif UE conforme à l'invention. Dans le mode de réalisation décrit ici, ce dispositif UE a l'architecture matérielle d'un ordinateur. Il comprend notamment un processeur 20, une mémoire vive 21, une mémoire morte 22, une mémoire flash non volatile 23 et des moyens de communication 24. De tels moyens sont connus en soi et ne sont pas décrits plus en détail ici.

La mémoire morte 22 constitue un support d'enregistrement conforme à l'invention, lisible par le processeur 20 et sur lequel est enregistré ici un programme d'ordinateur ProgUE conforme à l'invention, ce programme comportant notamment des instructions permettant notamment, lorsqu'elles sont exécutées par le processeur 20 :
- de détecter une demande de relais ;
- d'émettre une requête, sur un canal à accès aléatoire, pour demander des ressources d'un réseau pour relayer des données entre un objet et une station de base, cette requête comportant un identifiant de cet objet ;
- de recevoir une réponse à cette requête en provenance de la station de base;
- de comprendre que la candidature du dispositif est retenue ou rejetée en fonction de cette réponse ;
- de mettre en oeuvre les étapes B3 et B4 de la procédure d'accès aléatoire décrite en référence à la figure 3.

La **figure 7B** représente l'architecture matérielle d'une station de base gNB conforme à l'invention. Dans le mode de réalisation décrit ici, cette station de base gNB a l'architecture matérielle d'un ordinateur. Elle comprend notamment un processeur 10, une mémoire vive 11, une mémoire morte 12, une mémoire flash non volatile 13 et des moyens de communication 14. De tels moyens sont connus en soi et ne sont pas décrits plus en détail ici.

La mémoire morte 12 constitue un support d'enregistrement conforme à l'invention, lisible par le processeur 10 et sur lequel est enregistré ici un programme d'ordinateur ProggNB conforme à l'invention, ce programme comportant notamment des instructions permettant notamment, lorsqu'elles sont exécutées par le processeur 20 :
- de recevoir, en provenance d'au moins un dispositif d'une requête émise par ce dispositif, sur un canal à accès aléatoire, pour demander des ressources dudit réseau pour relayer lesdites données, cette requête comportant un identifiant de l'objet ;
- de sélectionner un unique dispositif (UE1) parmi lesdits dispositifs candidats ;
- d'allouer des ressources dans ledit réseau et d'envoyer une réponse positive au dispositif sélectionné;
- d'envoyer une réponse négative aux dispositifs candidats non sélectionnés ;
- de mettre en oeuvre les étapes B3 et B4 de la procédure d'accès aléatoire décrite en référence à la figure 3.

## Revendications

1. **Procédé de candidature** mis en oeuvre par un dispositif utilisateur (UE) désirant se porter candidat pour relayer des données entre un objet et une station de base (gNB) dans un réseau cellulaire, l'objet et ledit dispositif utilisateur (UE) étant synchronisés et connectés auprès de la station de base, ce procédé comportant :
- une étape (E10) d'émission d'une requête, sur un canal à accès aléatoire, pour demander des ressources dudit réseau pour relayer lesdites données, ladite requête comportant un identifiant dudit objet ;
- une étape (E20) de réception d'une réponse à ladite requête en provenance de ladite station de base (gNB) ;
- la candidature dudit dispositif utilisateur étant retenue ou rejetée en fonction de ladite réponse, le procédé étant **caractérisé en ce que** ladite requête comporte une demande de ressources dudit réseau pour transmettre des données propres audit dispositif utilisateur.

2. Procédé de candidature selon la revendication 1 dans lequel ledit canal à accès aléatoire est le canal PRACH, Physical Random Access Channel.

3. Procédé de candidature selon l'une quelconque des revendications 1 à 2 **caractérisée en ce que** ledit identifiant est un identifiant temporaire ou permanent.

4. Procédé de candidature selon l'une quelconque des revendications 1 à 2 **caractérisé en ce que** ledit identifiant est encodé dans ladite requête par une combinaison d'un intervalle de temps et d'une fréquence.

5. **Procédé de sélection** mis en oeuvre par une station de base (gNB) pour sélectionner un dispositif utilisateur (UE) candidat pour relayer des données entre un objet et ladite station de base (gNB) dans un réseau cellulaire, l'objet et ledit dispositif utilisateur (UE) étant synchronisés et connectés auprès de ladite station de base (gNB), ce procédé comportant :
- une étape (F10) de réception, en provenance d'au moins un dispositif utilisateur (UE1, UE2) d'une requête émise par ce dispositif, sur un canal à accès aléatoire, pour demander des ressources dudit réseau pour relayer lesdites données, ladite requête comportant un identifiant dudit objet ;
- une étape (F20) de sélection d'un unique dispositif utilisateur (UE1) parmi lesdits dispositifs utilisateur candidats ;
- une étape (F30) d'allocation desdites ressources dans ledit réseau et d'envoi d'une réponse positive audit dispositif utilisateur sélectionné ; et
- une étape (F40) d'envoi d'une réponse négative auxdits dispositifs utilisateur candidats non sélectionnés, le procédé étant **caractérisé en ce que** ladite requête comporte une demande de ressources dudit réseau pour transmettre des données propres audit dispositif utilisateur.

6. Procédé de sélection selon la revendication 5 dans lequel ladite réponse comporte en outre ledit identifiant de l'objet connecté.

7. Procédé de sélection selon la revendication 5 ou 6 dans lequel la réponse envoyée audit dispositif comportant en outre une réponse quant à l'allocation des ressources pour les données propres dudit dispositif.

8. **Dispositif** utilisateur (UE) désirant se porter candidat pour relayer des données entre un objet et une station de base (gNB) dans un réseau cellulaire, l'objet et ledit dispositif utilisateur (UE) étant synchronisés et connectés auprès de la station de base, ce dispositif utilisateur comportant :
- un module (ME10) d'émission d'une requête, sur un canal à accès aléatoire (PRACH), pour demander des ressources dudit réseau pour relayer lesdites données, ladite requête comportant un identifiant dudit objet ;
- un module (ME20) de réception d'une réponse à ladite requête en provenance de ladite station de base (gNB) ;
- la candidature dudit dispositif utilisateur étant retenue ou rejetée en fonction de ladite réponse, le dispositif utilisateur étant **caractérisé en ce que** ladite requête comporte une demande de ressources dudit réseau pour transmettre des données propres audit dispositif utilisateur.

9. **Station de base** (gNB) configurée pour sélectionner un dispositif utilisateur (UE) candidat pour relayer des données entre un objet et ladite station de base (gNB) dans un réseau cellulaire, l'objet et ledit dispositif utilisateur (UE) étant synchronisés et connectés auprès de ladite station de base (gNB), la station de base comportant :
- un module (MF10) de réception, en provenance d'au moins un dispositif utilisateur Z (UE1, UE2) d'une requête émise par ce dispositif utilisateur, sur un canal à accès aléatoire (PRACH), pour demander des ressources dudit réseau pour relayer lesdites données, ladite requête comportant un identifiant dudit objet ;
- un module (MF20) de sélection d'un unique dispositif utilisateur (UE1) parmi lesdits dispositifs utilisateur candidats ;
- un module (MF30) d'allocation desdites ressources dans ledit réseau et d'envoi d'une réponse positive audit dispositif utilisateur sélectionné ; et
- un module (MF40) d'envoi d'une réponse négative auxdits dispositifs utilisateur candidats non sélectionnés, le procédé étant **caractérisé en ce que** ladite requête comporte une demande de ressources dudit réseau pour transmettre des données propres audit dispositif utilisateur.

10. **Programme** d'ordinateur (ProgUE) comportant des instructions pour l'exécution d'un procédé de candidature selon l'une des revendications 1 à 4 lorsque ledit programme est exécuté par un ordinateur (UE).

11. **Programme** d'ordinateur (ProggNB) comportant des instructions pour l'exécution d'un procédé de sélection selon l'une des revendications 5 à 7 lorsque ledit programme est exécuté par un ordinateur (gNB).

## Patentansprüche

1. Kandidaturverfahren, das von einer Benutzervorrichtung (UE) durchgeführt wird, die kandidieren möchte, um Daten zwischen einem Objekt und einer Basisstation (gNB) in einem zellularen Netz weiterzuleiten, wobei das Objekt und die Benutzervorrichtung (UE) synchronisiert sind und mit der Basisstation verbunden sind, wobei dieses Verfahren umfasst:
- einen Schritt (E10) des Sendens einer Anfrage, über einen Direktzugriffskanal, um Ressourcen des Netzes anzufordern, um die Daten weiterzuleiten, wobei die Anfrage eine Kennung des Objekts umfasst;
- einen Schritt (E20) des Empfangens einer Antwort auf die Anfrage von der Basisstation (gNB);
- wobei die Kandidatur der Benutzervorrichtung in Abhängigkeit von der Antwort berücksichtigt oder abgelehnt wird, wobei das Verfahren **dadurch gekennzeichnet ist, dass** die Anfrage eine Anforderung von Ressourcen des Netzes umfasst, um eigene Daten an die Benutzervorrichtung zu übertragen.

2. Kandidaturverfahren nach Anspruch 1, wobei der Direktzugriffskanal der Kanal PRACH, Physical Random Access Channel, ist.

3. Kandidaturverfahren nach einem der Ansprüche 1 bis 2, **dadurch gekennzeichnet, dass** die Kennung eine temporäre oder permanente Kennung ist.

4. Kandidaturverfahren nach einem der Ansprüche 1 bis 2, **dadurch gekennzeichnet, dass** die Kennung in der Anfrage durch eine Kombination aus einem Zeitintervall und einer Frequenz kodiert ist.

5. Auswahlverfahren, das von einer Basisstation (gNB) durchgeführt wird, um eine Kandidaten-Benutzervorrichtung (UE) auszuwählen, um Daten zwischen einem Objekt und der Basisstation (gNB) in einem zellularen Netz weiterzuleiten, wobei das Objekt und die Benutzervorrichtung (UE) synchronisiert sind und mit der Basisstation (gNB) verbunden sind, wobei dieses Verfahren umfasst:
- einen Schritt (F10) des Empfangens, von mindestens einer Benutzervorrichtung (UE1, UE2), einer von dieser Vorrichtung gesendeten Anfrage, über einen Direktzugriffskanal, um Ressourcen des Netzes anzufordern, um die Daten weiterzuleiten, wobei die Anfrage eine Kennung des Objekts umfasst;
- einen Schritt (F20) des Auswählens einer einzigen Benutzervorrichtung (UE1) unter den Kandidaten-Benutzervorrichtungen;
- einen Schritt (F30) des Zuweisens der Ressourcen in dem Netz und des Übermittelns einer positiven Antwort an die ausgewählte Benutzervorrichtung; und
- einen Schritt (F40) des Übermittelns einer negativen Antwort an die nicht ausgewählten Kandidaten-Benutzervorrichtungen, wobei das Verfahren **dadurch gekennzeichnet ist, dass** die Anfrage eine Anforderung von Ressourcen des Netzes umfasst, um eigene Daten an die Benutzervorrichtung zu übertragen.

6. Auswahlverfahren nach Anspruch 5, wobei die Antwort ferner die Kennung des verbundenen Objekts umfasst.

7. Auswahlverfahren nach Anspruch 5 oder 6, wobei die an die Vorrichtung übermittelte Antwort ferner eine Antwort betreffend die Zuweisung der Ressourcen für die eigenen Daten der Vorrichtung umfasst.

8. Benutzervorrichtung (UE), die kandidieren möchte, um Daten zwischen einem Objekt und einer Basisstation (gNB) in einem zellularen Netz weiterzuleiten, wobei das Objekt und die Benutzervorrichtung (UE) synchronisiert sind und mit der Basisstation verbunden sind, wobei diese Benutzervorrichtung umfasst:
- ein Modul (ME10) zum Senden einer Anfrage, über einen Direktzugriffskanal (PRACH), um Ressourcen des Netzes anzufordern, um die Daten weiterzuleiten, wobei die Anfrage eine Kennung des Objekts umfasst;
- ein Modul (ME20) zum Empfangen einer Antwort auf die Anfrage von der Basisstation (gNB);
- wobei die Kandidatur der Benutzervorrichtung in Abhängigkeit von der Antwort berücksichtigt oder abgelehnt wird, wobei die Benutzervorrichtung **dadurch gekennzeichnet ist, dass** die Anfrage eine Anforderung von Ressourcen des Netzes umfasst, um eigene Daten an die Benutzervorrichtung zu übertragen.

9. Basisstation (gNB), die dazu ausgestaltet ist, eine Kandidaten-Benutzervorrichtung (UE) auszuwählen, um Daten zwischen einem Objekt und der Basisstation (gNB) in einem zellularen Netz weiterzuleiten, wobei das Objekt und die Benutzervorrichtung (UE) synchronisiert sind und mit der Basisstation (gNB) verbunden sind, wobei die Basisstation umfasst:
- ein Modul (MF10) zum Empfangen, von mindestens einer Benutzervorrichtung (UE1, UE2), einer von dieser Benutzervorrichtung gesendeten Anfrage, über einen Direktzugriffskanal (PRACH), um Ressourcen des Netzes anzufordern, um die Daten weiterzuleiten, wobei die Anfrage eine Kennung des Objekts umfasst;
- ein Modul (MF20) zum Auswählen einer einzigen Benutzervorrichtung (UE1) unter den Kandidaten-Benutzervorrichtungen;
- ein Modul (MF30) zum Zuweisen der Ressourcen in dem Netz und zum Übermitteln einer positiven Antwort an die ausgewählte Benutzervorrichtung; und
- ein Modul (MF40) zum Übermitteln einer negativen Antwort an die nicht ausgewählten Kandidaten-Benutzervorrichtungen, wobei das Verfahren **dadurch gekennzeichnet ist, dass** die Anfrage eine Anforderung von Ressourcen des Netzes umfasst, um eigene Daten an die Benutzervorrichtung zu übertragen.

10. Computerprogramm (ProgUE), das Anweisungen umfasst, die bei Ausführung des Programms durch einen Computer (UE) ein Kandidaturverfahren nach einem der Ansprüche 1 bis 4 ausführen.

11. Computerprogramm (ProggNB), das Anweisungen umfasst, die bei Ausführung des Programms durch einen Computer (gNB) ein Auswahlverfahren nach einem der Ansprüche 5 bis 7 ausführen.

## Claims

1. Application method implemented by a user device (UE) desiring to be a candidate for relaying data between an object and a base station (gNB) in a cellular network, the object and said user device (UE) being synchronized and connected to the base station, this method comprising:
- a step (E10) of sending a request, over a random-access channel, to request resources from said network for relaying said data, said request comprising an identifier of said object;
- a step (E20) of receiving a response to said request from said base station (gNB);
- the application of said user device being retained or rejected in accordance with said response, the method being **characterized in that** said request comprises a request for resources from said network for transmitting data which are specific to said user device.

2. Application method according to Claim 1, wherein said random-access channel is the physical random-access channel (PRACH).

3. Application method according to either one of Claims 1 and 2, **characterized in that** said identifier is a temporary or permanent identifier.

4. Application method according to either one of Claims 1 and 2, **characterized in that** said identifier is encoded in said request by a combination of a time interval and a frequency.

5. Selection method implemented by a base station (gNB) for selecting a user device (UE) which is a candidate for relaying data between an object and said base station (gNB) in a cellular network, the object and said user device (UE) being synchronized and connected to said base station (gNB), this method comprising:
- a step (F10) of receiving, from at least one user device (UE1, UE2), a request sent by this device, over a random-access channel, to request resources from said network for relaying said data, said request comprising an identifier of said object;
- a step (F20) of selecting a single user device (UE1) from among said candidate user devices;
- a step (F30) of allocating said resources in said network and of sending a positive response to said selected user device; and
- a step (F40) of sending a negative response to said unselected candidate user devices, the method being **characterized in that** said request comprises a request for resources from said network for transmitting data which are specific to said user device.

6. Selection method according to Claim 5, wherein said response further comprises said identifier of the connected object.

7. Selection method according to Claim 5 or 6, wherein the response sent to said device further comprises a response as to the allocation of the resources for the data which are specific to said device.

8. User device (UE) desiring to be a candidate for relaying data between an object and a base station (gNB) in a cellular network, the object and said user device (UE) being synchronized and connected to the base station, this user device comprising:
- a module (ME10) for sending a request, over a random-access channel (PRACH), to request resources from said network for relaying said data, said request comprising an identifier of said object;
- a module (ME20) for receiving a response to said request from said base station (gNB);
- the application of said user device being retained or rejected in accordance with said response, the user device being **characterized in that** said request comprises a request for resources from said network for transmitting data which are specific to said user device.

9. Base station (gNB) configured to select a user device (UE) which is a candidate for relaying data between an object and said base station (gNB) in a cellular network, the object and said user device (UE) being synchronized and connected to said base station (gNB), the base station comprising:
- a module (MF10) for receiving, from at least one user device (UE1, UE2), a request sent by this user device, over a random-access channel (PRACH), to request resources from said network for relaying said data, said request comprising an identifier of said object;
- a module (MF20) for selecting a single user device (UE1) from among said candidate user devices;
- a module (MF30) for allocating said resources in said network and for sending a positive response to said selected user device; and
- a module (MF40) for sending a negative response to said unselected candidate user devices, the method being **characterized in that** said request comprises a request for resources from said network for transmitting data which are specific to said user device.

10. Computer program (ProgUE) comprising instructions for executing an application method according to one of Claims 1 to 4 when said program is executed by a computer (UE).

11. Computer program (ProggNB) comprising instructions for executing a selection method according to one of Claims 5 to 7 when said program is executed by a computer (gNB).
